# EUROPEAN PATENT SPECIFICATION

(11) **EP 1 748 537 B1**
(45) Date of publication and mention of the grant of the patent: **16.03.2016**
(21) Application number: 06015102.4
(22) Date of filing: 20.07.2006
(51) Int. Cl.: H02K 7/00, H02K 7/14, H02K 16/00

(54) **Z-theta table activated by two rotary motors**
Z-theta Tisch mit zwei rotierende Motoren
Table Z-theta activée par deux moteurs tournants

(30) Priority: 28.07.2005 CH 12612005
(43) Date of publication of application: 31.01.2007
(73) Proprietor: ETEL S.A., 2112 Môtiers (CH)
(72) Inventor: Morel, Jean-Pierre, 25300 Les Petits-Fourgs (FR)
(74) Representative: Pleyer, Hans Anno

(56) References cited:
- US-B1- 6 433 447
- US-B1- 6 570 282
- US-B1- 6 700 249

## Description

### FIELD OF THE INVENTION

The invention involves a Z-theta table, hereinafter referred to as a Z-θ table, activated in such a way that the table bed can undergo displacement along a linear Z axis and rotation, allowing angular, θ, positioning. The rotational movement and the linear displacement are obtained by means of two rotary electric motors.

### PRIOR ART

A Z-θ table of the type mentioned above is described in US patent 6,700,249. According to this document, the Z-θ table consists of two stacked circular motors, that is, arranged one above the other in the table's Z direction. The lower motor comprises a fixed external stator and a central rotor occupying the interior space of the stator. The upper part of this central rotor is threaded. The upper motor also comprises an external stator associated with sliding means enabling this stator to undergo displacement along the vertical Z axis. This upper stator comprises a base with an annular central part forming a nut associated with the threaded part of the rotor of the lower motor. Therefore, whenever the lower rotor is activated, the stator of the upper motor undergoes vertical displacement. The rotor of the upper motor is independent of the linear movement and allows angular positioning of the table. Linear movement is controlled by the single lower motor, whereas rotation is controlled only by the upper motor.

To control both movements, the central lower rotor is associated with a circular encoder, while the upper motor stator is associated with a linear encoder mounted on the periphery of the table. Each of these two degrees of freedom, therefore, is associated with its own individual motor. In this sense, the two motors are independent, which represents a certain advantage in controlling the Z-θ table.

However, the table proposed by US document 6,700,249 presents several major drawbacks. Because of the arrangement of the two stacked motors, the table height is relatively significant. An angular offset of the central axis of the lower motor relative to the vertical axis engenders a positioning error that increases proportionally with the height of the table. The mass of the table in the prior art described above is relatively high. Also, because the upper motor has a stator that undergoes vertical displacement, the power cable of this upper motor undergoes movement whenever the table is activated, which can be detrimental, especially for clean-room applications. The fact that the ball-screw system between the two motors presents a relatively small diameter with respect to the dimensions of the table results in a limit to the load that can be carried by the table described above. This also reduces the stability of the table. Moreover, the load supported by the table is taken up by the fixed lower stator through two bearings or ball bearings, which is an impediment to the rigidity and stability of the table. In particular, there is a risk that a decentered load will tilt the Z-θ table base.

### SUMMARY OF THE INVENTION

The purpose of the present invention is to supply a compact and reduced size Z-θ table that overcomes the drawbacks of the device of the aforementioned prior art.

To that end, the present invention concerns a Z-θ table whose bed can experience displacement along the Z axis and angular positioning, θ, said table comprising two substantially concentric rotary motors, namely a first, internal, motor having a fixed central stator and a first rotor arranged on the exterior of this central stator, and a second, external, motor having a fixed peripheral stator and a second rotor arranged inside this peripheral stator. One of the two rotors comprises a first cylindrical portion that is threaded and the other has Z-axis linear guide means. The Z-θ table according to the invention also comprises an intermediate piece supporting the table bed and having, on the one hand, a second cylindrical portion that is threaded and, on the other hand, sliding means associated with said guide means to enable displacement of said intermediary piece along the Z axis, said first and second cylindrical portions together forming a ball-screw system.

Due to the characteristics of the table according to the invention, the behavior of this table is particularly efficient. In particular, the load carried by the bed is taken up by means of a single bearing or a ball bearing. The two stators are fixed and arranged on two sides of the rotary assembly formed by the two table rotors and the intermediary piece, which implies that the motor power cables remain fixed during activation of the Z-θ table. The two rotors act in complementary manner on the intermediate piece carrying the table bed to bring about either a linear displacement along the Z axis, or an angular displacement, or a helical movement.

Measurement of table position occurs by means of two angular encoders associated respectively with the two rotors, each of which has a circular scale. This results in very high definition when measuring the exact position of each of the two rotors. Even if no vertical encoder for measuring the position of the bed on the Z axis is provided, the precision of vertical positioning is ensured by these angular encoders and the prestress exercised by the load on the threaded portion of the intermediate piece.

### BRIEF DESCRIPTION OF THE DRAWINGS

The present invention will be described in greater detail by means of the following description, which refers to the attached drawing, given as a non-limiting example. In the drawing:
- FIG. 1 is a cutaway view of a preferred embodiment of a Z-θ table according to the invention, and
- FIG. 2 is a perspective view of the table of FIG. 1, showing two partial perpendicular cutaway views.

### DETAILED DESCRIPTION

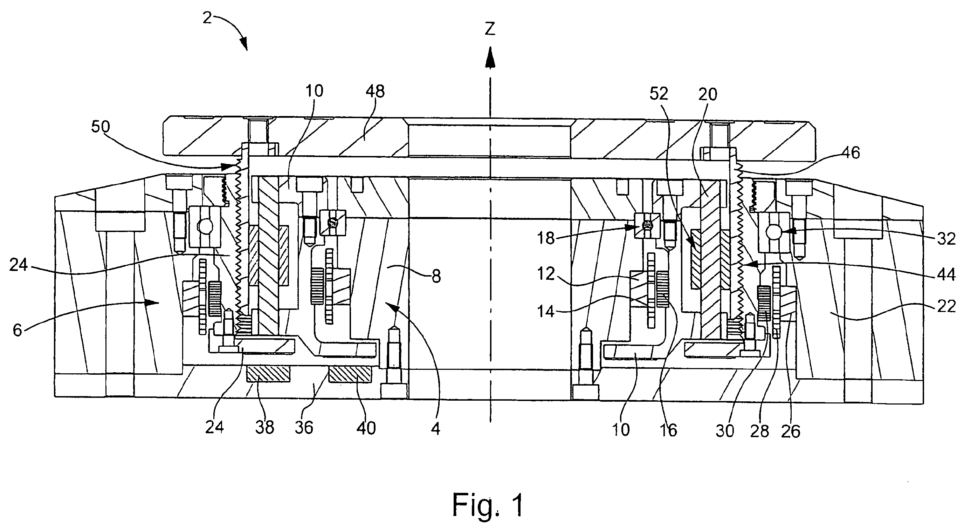

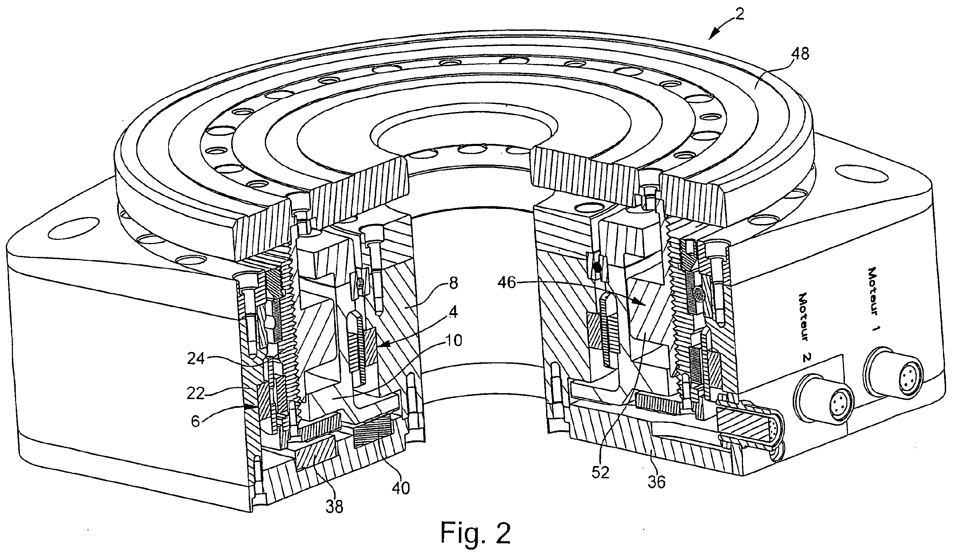

Referring to figures 1 and 2, a preferred embodiment of a Z-θ table according to the invention will be described.

Table 2 comprises internal motor 4 and external motor 6 substantially concentric to one another. Note that the FIG. 1 cutaway view is axially symmetric around the Z axis, with the possible exception of the arrangement of the magnets and windings of the two motors 4 and 6. References are indifferently provided either on the left or on the right of the cutaway shown in FIG. 1.

Internal motor 4 comprises fixed central stator 8 and rotor 10 arranged on the exterior of the central stator. Stator 8 comprises lamination stack 12 bearing winding 14. Rotor 10 carries magnets 16 opposite coils 14. Stator 8 and rotor 10 are associated with one another by means of first ball bearing 18. Rotor 10 has columns 20 arranged between two projecting parts oriented toward the exterior of rotor 10. These columns 20 define the linear guide means along the Z axis, whose function will be described in greater detail below.

External motor 6 comprises peripheral fixed stator 22 and rotor 24 arranged within this stator. Stator 22 also comprises lamination stack 26 bearing winding 28. Rotor 24 has magnets 30, situated opposite winding 28. Stator 22 and rotor 24 are associated with one another by a second ball bearing 32.

Stators 8 and 22 are connected together by base plate 36. The two stators and the base plate define an internal housing for the two rotors 10 and 24. Each of the rotors presents a planar lower part with a circular scale situated opposite a displacement measurement sensor, respectively 38, 40. These sensors are preferably of the optical type.

Rotor 24 comprises an interior cylindrical portion with threaded portion 44 defining a nut of large diameter relative to the dimensions of the Z-θ table. Finally, table 2 comprises intermediate piece 46 supporting bed 48 of the Z-θ table. Intermediate piece 46 has a cylindrical portion presenting external threaded portion 50 and defining a threaded screw. On the other hand, intermediate piece 46 comprises sliding means 52 associated with guide means defined by columns 20 to enable displacement of this intermediate piece 46 along the vertical axis, Z. Threaded cylindrical portion 44 of rotor 24 and threaded cylindrical portion 50 of intermediate piece 46 together form a ball-screw system. Slide means 52 are here formed by vertical holes machined in a circular portion arranged within the threaded cylindrical portion. Columns 20 are arranged in these vertical holes and rotor 10 is arranged so that the internal circular portion of intermediate piece 46 can undergo a displacement along the vertical axis, Z, between the two external protruding parts of this rotor.

Note that a person skilled in the art can foresee other variants for the sliding means and the guide means. For example, the internal circular portion of the intermediary piece can be replaced by sleeves provided only at those places where columns 20 are arranged. The number of columns is, for example, equal to four or more, notably eight. In another embodiment, the system with a column arranged in a hole crossing the Z axis can be replaced by a system with a groove in which a slide moves. The grooves can, for example, be arranged on the periphery of rotor 10 and the respective slides arranged vertically on the internal surface of threaded cylindrical portion 50 of intermediary piece 46.

It will be observed that the load placed on bed 48 is transmitted to peripheral stator 22 and base 36 via a single ball bearing, namely ball bearing 32 of the external motor. This increases the rigidity and stability of the Z-θ table. Thus, ball bearing 18 can be smaller in size. Note that the diameter of the ball-screw system provided for in the table of the present invention is large relative to the dimensions of the table, which increases the stability of the table and enables it to support relatively high loads. The two motors being substantially concentric, the height of the Z-θ table is not very high.

Also note that in a variant embodiment, the ball-screw system can be provided between the rotor of the internal motor and the intermediary part, while the guide means are arranged on the rotor of the external motor. In this last variant, the intermediary part defines a nut, while the rotor of the internal motor defines the screw of the ball-screw system.

To displace bed 48 along vertical axis Z, it is sufficient to activate external motor 6. Bed 48 is maintained in its angular position by the rotor of the internal motor. To angularly position table 48 without effecting any linear displacements, the two rotors 10 and 24 must be simultaneously made to rotate at the same angular velocity. Thus, the entire rotary assembly is made to rotate without intermediary piece 46 experiencing any linear displacement. Between linear displacement and pure rotation, an appropriate command can bring about any type of movement combining linear displacement with angular positioning. The two angular encoders 38 and 40 associated with the two rotors can be used to precisely control the position and movements of bed 48.

## Claims

1. Z-θ table (2) having a bed (48) capable of undergoing linear displacement along a Z axis and angular positioning θ, and comprising two rotary motors, **characterized in that** the two motors are arranged substantially concentric and define, respectively, an internal motor (4) and an external motor (6), said internal motor having a fixed central stator (8) and a first rotor (10) arranged on the exterior of the central stator, said external motor having a fixed peripheral stator (22) and a second rotor (24) arranged within the peripheral stator, one of the first and second rotors comprising a first threaded cylindrical portion (44) and the other comprising linear guide means (20) along the Z axis, this Z-θ table also comprising an intermediary piece (46) supporting said bed and having a second threaded cylindrical portion (50) and sliding means (52) associated with said guide means to enable linear displacement of said intermediary piece along said Z axis, said first and second cylindrical portions together forming a ball-screw system.

2. Z-θ table as recited in claim 1, **characterized in that** the first and second rotors (10, 24) are mounted in rotary fashion, respectively, on the central stator (8) and on the peripheral stator (22) by means of first and second ball bearings (18, 32), these central and peripheral stators being interdependent.

3. Z-θ table as recited in claim 1 or 2, **characterized in that** said first threaded cylindrical portion (44) belongs to said second rotor (24) and said linear guide means (20) belong to said first rotor (10), these linear guide means being arranged within said second threaded cylindrical portion (50).

4. Z-θ table as recited in one of the previous claims, **characterized in that** said first and second rotors are respectively associated with first and second angular displacement sensors arranged on a base (36) supporting the central and peripheral stators (8, 22).

5. Z-θ table as recited in one of the previous claims, **characterized in that** said linear guide means are formed by columns (20), said complementary sliding means being defined by holes traversing, along said Z axis, a circular portion (52) arranged within said second cylindrical portion of said intermediary piece (46).

## Patentansprüche

1. Z-θ-Tisch (2) mit einem Bett (48), der einer linearen Verschiebung entlang einer Z-Achse und einer Winkelpositionierung θ unterliegen kann und der zwei rotierende Motoren umfasst, **dadurch gekennzeichnet, dass** die beiden Motoren im Wesentlichen konzentrisch angeordnet sind und einen inneren Motor (4) bzw. einen äußeren Motor (6) definieren, wobei der innere Motor einen festen zentralen Stator (8) und einen ersten Rotor (10), der außen am zentralen Stator angeordnet ist, aufweist, wobei der äußere Motor einen festen peripheren Stator (22) und einen zweiten Rotor (24), der innerhalb des peripheren Stators angeordnet ist, aufweist, wobei einer von dem ersten oder dem zweiten Rotor einen ersten zylindrischen Gewindeteil (44) umfasst und der andere lineare Führmittel (20) entlang der Z-Achse umfasst, wobei dieser Z-θ-Tisch außerdem ein Zwischenstück (46) umfasst, das das Bett stützt, und einen zweiten zylindrischen Gewindeteil (50) sowie ein Verschiebemittel (52) umfasst, das den Führmitteln zugeordnet ist, um eine lineare Verschiebung des Zwischenstücks entlang der Z-Achse zu ermöglichen, wobei der erste und der zweite zylindrische Teil zusammen ein Kugelgewindesystem bilden.

2. Z-θ-Tisch nach Anspruch 1, **dadurch gekennzeichnet, dass** der erste und der zweite Rotor (10, 24) in drehbarer Weise auf den zentralen Stator (8) bzw. den peripheren Stator (22) montiert sind, mittels eines ersten und eines zweiten Kugellagers (18, 32), wobei der zentrale und der periphere Stator ineinandergreifen.

3. Z-θ-Tisch nach Anspruch 1 oder 2, **dadurch gekennzeichnet, dass** der erste zylindrische Gewindeteil (44) zu dem zweiten Rotor (24) gehört und die linearen Führmittel (20) zu dem ersten Rotor (10) gehören, wobei die linearen Führmittel innerhalb des zylindrischen Gewindeteils (50) angeordnet sind.

4. Z-θ-Tisch nach einem der vorstehenden Ansprüche, **dadurch gekennzeichnet, dass** der erste und der zweite Rotor mit einem ersten bzw. einem zweiten Winkelverschiebungssensor verknüpft sind, die auf einer Basis (36) angeordnet sind, welche den zentralen und den peripheren Stator (8, 22) stützt.

5. Z-θ-Tisch nach einem der vorstehenden Ansprüche, **dadurch gekennzeichnet, dass** die linearen Führmittel von Säulen (20) gebildet werden, wobei die komplementären Verschiebemittel durch Löcher definiert werden, die entlang der Z-Achse einen kreisförmigen Teil (52) queren, welcher innerhalb des zweiten zylindrischen Teils des Zwischenstücks (46) angeordnet ist.

## Revendications

1. Table Z-θ (2) dotée d'un plateau (48) susceptible de subir un déplacement linéaire suivant un axe Z et un positionnement angulaire θ, et comportant deux moteurs rotatifs, **caractérisée en ce que** les deux moteurs sont disposés de façon sensiblement concentrique et définissent respectivement un moteur interne (4) et un moteur externe (6), ledit moteur interne possédant un stator central (8) fixe et un premier rotor (10) disposé sur l'extérieur du stator central, ledit moteur externe possédant un stator périphérique (22) fixe et un deuxième rotor (24) disposé à l'intérieur du stator périphérique, l'un des premier et deuxième rotors comportant une première partie cylindrique filetée (44) et l'autre comportant des moyens (20) de guidage linéaire suivant l'axe Z, cette table Z-0 comportant également une pièce intermédiaire (46) soutenant ledit plateau et possédant une deuxième partie cylindrique filetée (50) et des moyens coulissants (52) associés auxdits moyens de guidage pour permettre un déplacement linéaire de ladite pièce intermédiaire suivant ledit axe Z, lesdites première et deuxième parties cylindriques formant ensemble un système de vis à bigle.

2. Table Z-θ selon la revendication 1, **caractérisée en ce que** les premier et deuxième rotors (10, 24) sont montés de façon rotative, respectivement, sur le stator central (8) et sur le stator périphérique (22) au moyen de premier et deuxième roulements (18, 32) à billes, lesdits stators central et périphérique étant interdépendants.

3. Table Z-θ selon la revendication 1 ou 2, **caractérisée en ce que** ladite première partie cylindrique filetée (44) appartient audit deuxième rotor (24) et **en ce que** lesdits moyens (20) de guidage linéaire appartiennent audit premier rotor (10), ces moyens de guidage linéaire étant disposés à l'intérieur de ladite deuxième partie cylindrique filetée (50).

4. Table Z-θ selon l'une des revendications précédentes, **caractérisée en ce que** lesdits premier et deuxième rotors sont respectivement associés à des premier et deuxième capteurs de déplacement angulaire disposés sur un socle (36) portant les stators central et périphérique (8, 22).

5. Table Z-θ selon l'une des revendications précédentes, **caractérisée en ce que** lesdits moyens de guidage linéaire sont formés par des colonnes (20), lesdits moyens coulissants complémentaires étant définis par des trous traversant, suivant ledit axe Z, une partie circulaire (52) disposée à l'intérieur de ladite deuxième partie cylindrique de ladite pièce intermédiaire (46).
